## Europäisches Patentamt
## European Patent Office
## Office européen des brevets

(11) Veröffentlichungsnummer: **0 218 792**
**B1**

(12) **EUROPÄISCHE PATENTSCHRIFT**

(45) Veröffentlichungstag der Patentschrift: 08.08.90

(21) Anmeldenummer: 86108321.0

(22) Anmeldetag: 19.06.86

(51) Int. Cl.⁵: **F 16 K 5/00, F 16 K 31/04**

(30) Priorität: 19.08.85 DE 3529595

(43) Veröffentlichungstag der Anmeldung:
22.04.87 Patentblatt 87/17

(45) Bekanntmachung des Hinweises auf die
Patenterteilung:
08.08.90 Patentblatt 90/32

(84) Benannte Vertragsstaaten:
BE CH FR GB IT LI NL

(56) Entgegenhaltungen:
AT-B- 322 310
DE-B-1 138 991
US-A-4 398 562

(73) Patentinhaber: KERNFORSCHUNGSZENTRUM
KARLSRUHE GMBH
Weberstrasse 5 Postfach 3640
D-7500 Karlsruhe 1 (DE)

(72) Erfinder: Jentzsch, Klaus
Grünewaldstrasse 9
D-7513 Stutensee-Fr. (DE)

(54) Kugelventil.

Courier Press, Leamington Spa, England.

**Beschreibung**

Die vorliegende Erfindung betrifft ein Kugelventil gemäß dem Oberbegriff des Patentanspruches.

Sie befaßt sich u.a. mit Absperrorganen im Verhältnis zur Durchflußöffnung kleiner äußerer Abmessungen, die in einer Rohrleitung ein oder an einer Apparatur angebaut werden können. Es sollen damit flüssige oder gasförmige Medien unter hohen bis sehr tiefen Temperaturen so abgesperrt werden, daß beim Öffnen der volle Durchströmungsquerschnitt einer Rohrleitung oder eines Austrittsstutzens freigegeben wird.

Spezieller Anwendungszweck für ein solches Ventil ist ein Gyrotron, welches mit einer Strahlleistung von 100 KW bei 150 GHz arbeitet. In den evakuierten Strahlkanal eines solches Gyrotrons soll ein Ventil eingebaut werden, das einerseits den gesamten Strahlrohrquerschnitt hinter der Elektronenstrahlkanone freigibt, andererseits die Kanone bei experimentell bedingten Umbauten vor einer atmosphärischen Belüftung schützt. Das Ventil muß demnach vakuumdicht schließen, mit der gesamten Strahlführungseinheit bei 450°C ausgeheizt und durch die Bohrung im Kryostaten des Magnetsystems geschoben werden können. Besonders geeignet sind für diesen Zweck Kugelventile, welche wegen der hohen Ausheiztemperatur mit Metalldichtungen mit Rückfedereigenschaften ausgerüstet werden.

Kugelventile bzw. Ventile mit drehbarem Ventilkörper sind aus der US—A—4398562, der AT—B—322310 und der DE—B—1138991 bekannt, jedoch für die genannten Zwecke aus den angegebenen Gründen nicht anwendbar.

Aufgabe der vorliegenden Erfindung ist es demnach, ein Kugelventil der eingangs beschriebenen Art mit einer Metall-dichtung zu schaffen, welches unter den angegebenen Bedingungen ein einwandfreies Schließen und Öffnen des Ventilkörpers ohne Beschädigung der Dichtflächen ermöglicht.

Zur Lösung dieser Aufgabe schlägt die vorliegende Erfindung die Merkmale vor, die im Kennzeichen des Patentanspruches aufgeführt sind.

Der besondere Vorteil des erfindungsgemäßen Ventils besteht nun in einer völlig entspannten Schwenkbewegung der Dichtkugel. Dabei erfolgt das Schwenken und Anpressen derselben durch eine gemeinsame Betätigungseinheit. Durch die Balgabdichtung der Bewegungselemente nach außen und durch den Einsatz von metallischen Dichtelementen ist das Ventil besonders für den Einsatz unter den eingangs beschriebenen Bedingungen geeignet. Die Dichtkraft kann individuell an das Material und an die Querschnittsform des Dichtringes entsprechend dem abzudichteten Medium angepaßt werden. Die Dichtkugel kann auch aus keramischen Werkstoffen hergestellt werden. Anstelle der Metalldichtringe können auch nichtmetallische oder abriebgefährdete Dichtringe, z.B. aus Graphit zum Einsatz kommen. Die erwähnten Metalldichtringe können z.B. zum Einsatz im Hochvakuum auch galvanisch überzogen oder beschichtet sein.

Weitere Einzelheiten der vorliegenden Erfindung werden im folgenden anhand der Figuren näher erläutert:

Die Figur 1 zeigt das Kugelventil im Seitenschnitt,

die Figur 2 einen Schnitt entlang der Linie A—A der Figur 1,

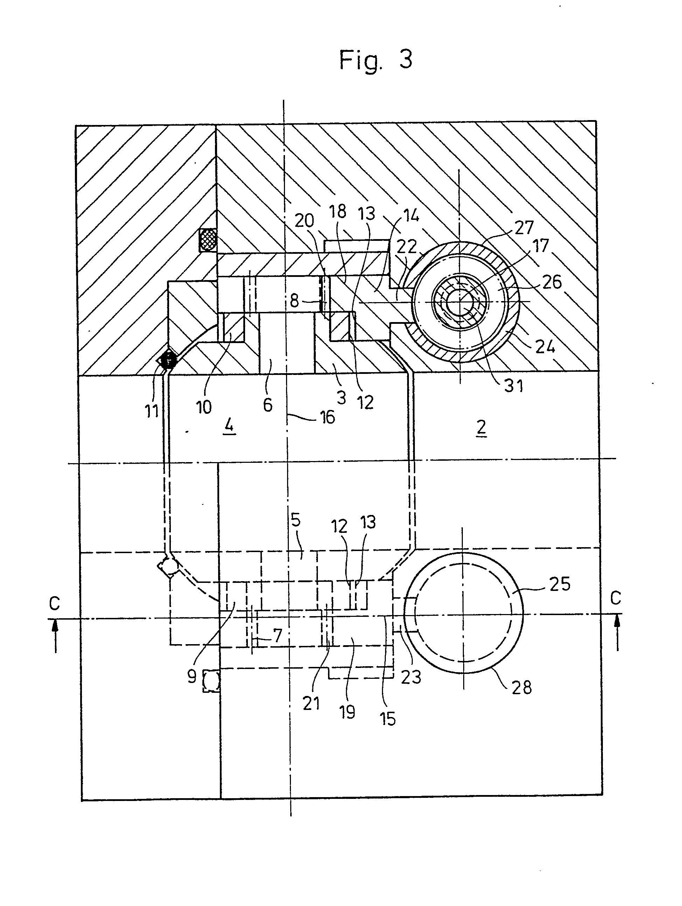

die Figur 3 einen Halbschnitt entlang der Linie B—B der Figur 1 und

die Figur 4 einen Schnitt entlang der Linie C—C der Figur 3 bei geöffnetem Kugelventil,

die Figur 5 den Schnitt wie Figur 4 bei geschlossenem Kugelventil.

Das Gehäuse 1 des Kugelventils weist eine Durchflußbohrung 2 auf, in welcher die seitlich mit Flächen versehene, als Verschlußelement dienende Dichtkugel 3 eingeschaltet ist. Die Dichtkugel 3 wiederum ist drehbar und weist ihrerseits eine Bohrung 4 auf, die mit der Kugel 3 so schwenkbar ist, daß sie mit der Durchflußbohrung fluchtet. Durch Drehen der Dichtkugel 3 kann somit die Durchflußbohrung 2 abgesperrt werden. Gegenüber dem Gehäuse 1 weist die Kugel — bezogen auf ihren Durchmesser — etwas Spiel bzw. geringeren Durchmesser auf. Zum Drehen der Dichtkugel 3 besitzt diese zwei einander gegenüberliegende zentrisch und rechtwinklig zur Durchflußbohrung 2 angeordnete und an ihren Enden mit Verzahnungen 7 und versehene Drehzapfen 5 und 6. Diese Drehzapfen 5 und 6 sind in parallel zur Durchflußbohrung 2 verschiebbaren Lagereinheiten 9 und 10 gelagert, die an der, der als Dichtelement des Ventiles dienenden Metallringdichtung 11 entgegengesetzten Seite der Dichtkugel 3 unter einem bestimmten Winkel angeschrägt sind. Die angeschrägte Fläche 12 jeder Lagereinheit 9, 10 liegt an einer entsprechend angeschrägten Fläche 13 von zu beiden Drehzapfen 5 und 6 zugeordneten Bewegungselementen 14 und 15 an, die senkrecht zur Drehachse 16 der Zapfen 5 und 6 längsverschieblich im Gehäuse 1 gelagert sind und deren Flächenschräge dem Abstand bezüglich der Verschiebeachse 17 zu- bzw. abnimmt. Dabei nimmt deren Druck aufeinander bezüglich dem Hub in der Verschiebeachse zu bzw. ab.

Die Bewegungselemente 14 und 15 weisen neben ihren schrägen Flächen 13 seitliche Erhöhungen 18 und 19 auf, auf denen verkürzte Zahnstangen 20 und 21 sitzen, die über ein Stück des Verschiebeweges der Bewegungselemente 14 und 15 mit den Verzahnungen 7 und 8 kämmen. Neben den Zahnstangen 20 und 21 besteht somit eine Lücke 34 auf den Erhöhungen 18 und 19. Auf den gegenüberliegenden Seiten der Bewegungselemente 14 und 15 sitzt jeweils ein Bund 22 und 23, der jeweils in die axial in der Verschiebeachse 17 verschieblichen Hülsen 24 und 25 eingreift, wobei der Innenraum der Hülse mittels eines Metallfederbalges 26 nach außen bzw. gegenüber der Außenseite des Gehäuses 1 abgedichtet ist.

Die Hülsen 24 und 25 gleiten in Querbohrungen 27 und 28 mit der Verschiebeachse 17, wobei die Bohrungen 27 und 28 an der einen Seite mittels eines Deckels 29 dicht verschweißt sind. An der anderen Seite der Bohrungen 27 und 28 ist in der Scheibe 30 eine Gewindespindel 31 drehbar gelagert, deren Gewinde 32 in die Hülsen 24, 25 eingeschraubt ist und deren Betätigungskopf 35 über die Scheibe 30 zur Betätigung der Spindel hinausragt.

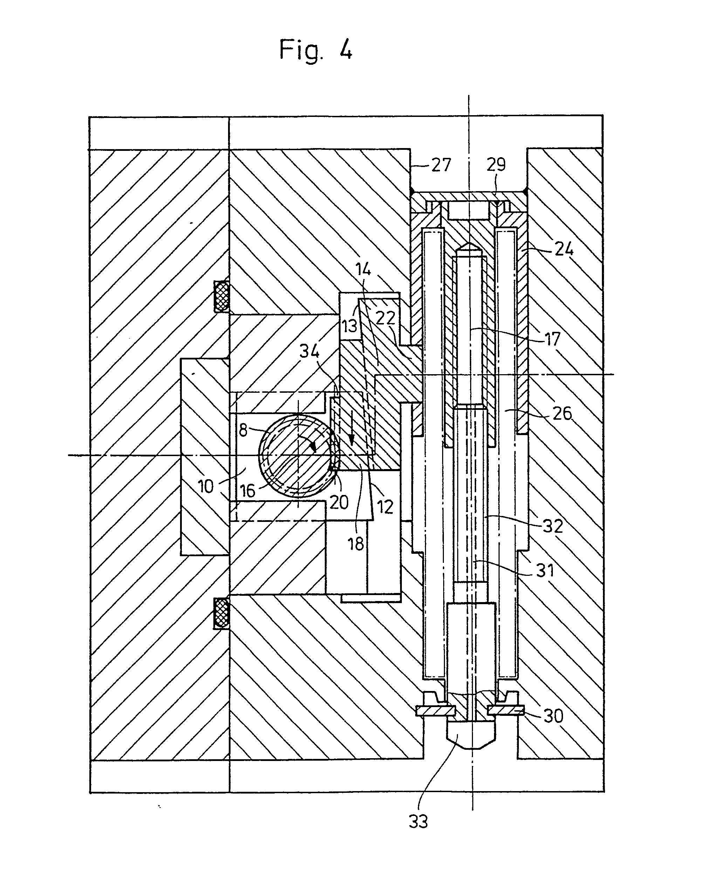

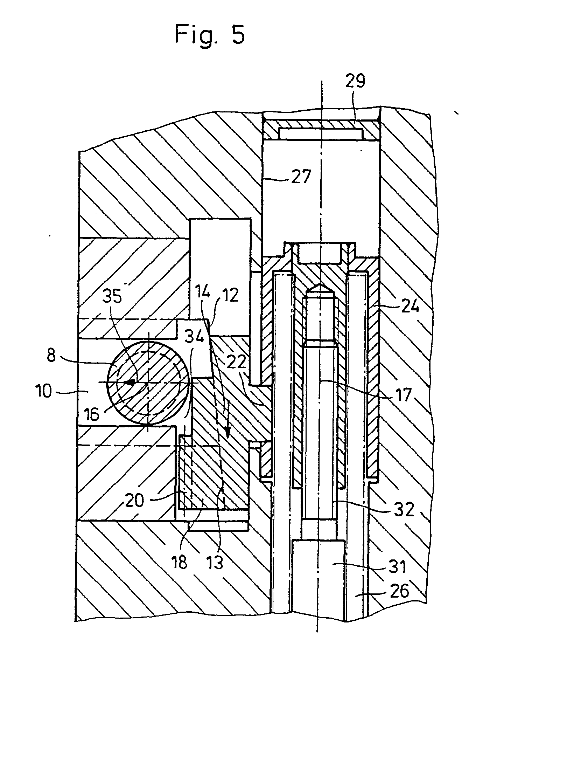

Die Funktion des Ventiles ist nun wie folgt (Fig. 4 und 5):

Das Ventil befindet sich gemäß Figur 4 in geöffneter Position die Bohrung 4 der Dichtkugel 3 fluchtet mit der Durchflußbohrung 2. Für die weiteren Funktionen bzw. Bewegungen wird lediglich die Seite des Zapfens 6 betrachtet, die Elemente der den Zapfen 5 zugeordneten Seite sind und Funktionen spiegelbildlich dazu:

Das Bewegungselement 14 ist mit der Hülse 24 über den Bund 22 durch Ausschrauben des Gewindes 32 am Kopf 33 nach oben gefahren. Das untere Ende der Zahnstange 20 ist dabei im Eingriff mit der Verzahnung 8. Dadurch hat sich die Fläche 13 von der schrägen Fläche 12 gelöst, wodurch keine Kraft mehr auf die Lagereinheit ausgeübt wird. Damit übt auch die Dichtkugel keine Kräfte auf die Metalldichtung 11 aus.

Durch Drehen am Kopf 30 fährt das Bewegungselement 14 nach unten und dreht durch Eingriff der Zahnstange 20 in die Verzahnung 8 den Zapfen 6 bzw. die Kugel um die Drehachse 16. Damit wird die Bohrung weggedreht, das Ventil schließt sich ohne Kraft auf den Dichtring 11. Die 90°-Drehung der Kugel 3 ist beendet, wenn die Zahnstange 20 außer Eingriff mit der Verzahnung 8 gerät und die Lücke 34 an die Stelle der Zahnstange 20 tritt. Die Drehbewegung ist damit beendet.

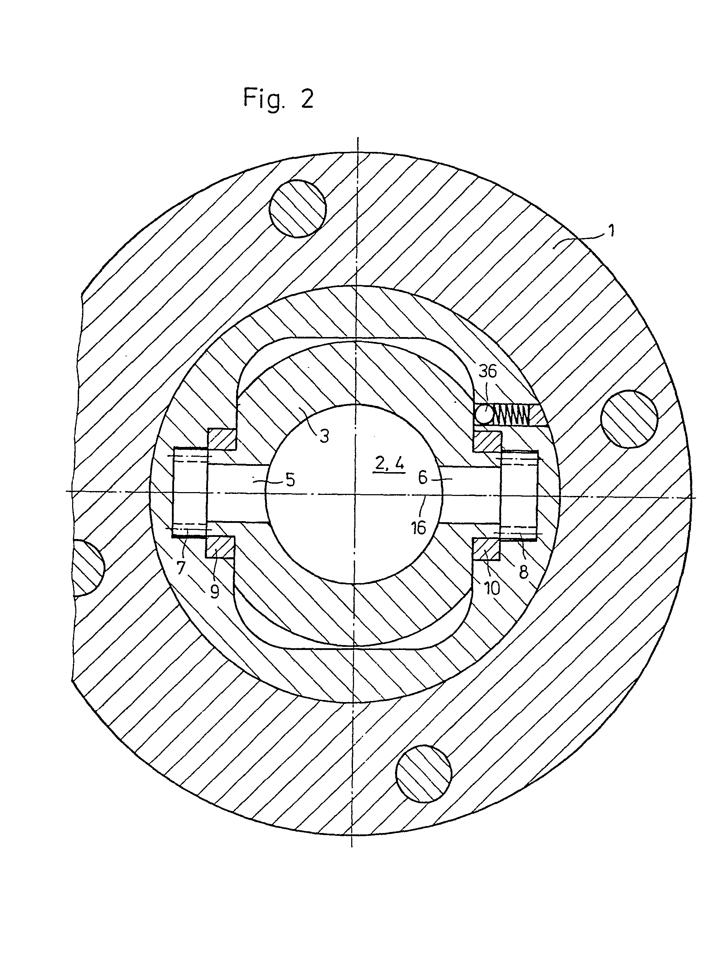

Im gleichen Zeitpunkt sind die schrägen Flächen 12 und 13 aneinander zur Anlage gekommen, das Bewegungselement 14 drückt nun die Lagereinheit 10 — bei einer weiteren Bewegung nach unten — horizontal in Pfeilrichtung 35, der zum Abdichten notwendige Druck auf die Metalldichtung 11 wird aufgebaut, das Ventil ist ganz geschlossen (siehe Figur 2).

Zum Öffnen des Ventiles laufen nun die Vorgäng in umgekehrter Reihenfolge ab:

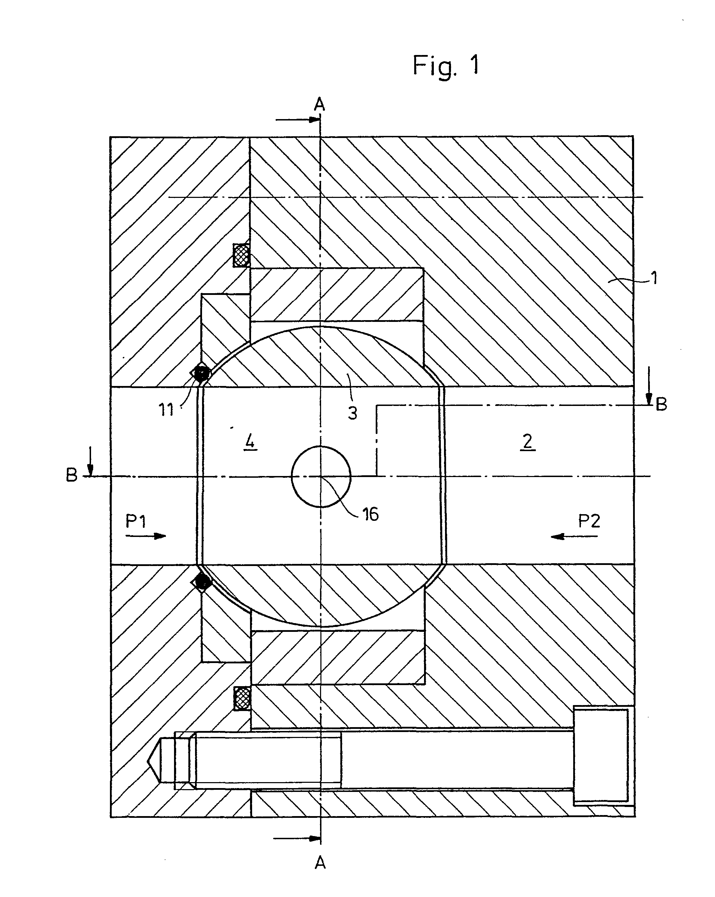

Durch Drehen am Kopf 33 wird das Gewinde 32 aus der Hülse 24 ausgeschraubt, d.h. diese bewegt sich wieder nach oben, löst zunächst den Druck auf die Metalldichtung 11, die Rückfedereigenschaften aufweisen kann und dreht anschließend die Dichtkugel wieder in die, in der Figur 1 gezeigte Offenposition, ohne das die Dichtungskraft irgendwelche Flächen auf der Kugel beschädigen kann. Eine Arretierung mittels z.B. einer Kugelsicherung 36 verhindert dabei ein ungewolltes Schwenken der Dichtungskugel beim Übergang der Dreh- in die Dichtbewegung und umgekehrt. Das Drehen an den Betätigungsköpfen 33 kann sowohl durch einen abnehmbaren Gleichlaufantrieb für beide, als auch mittels eines gemeinsamen Einspindelantriebes erfolgen. Das Ventil ist vorzugsweise für Einbauverhältnisse vorgesehen, bei denen der Druck P1 in der Durchflußbohrung 2 auf Seite der Dichtung 11, bezogen auf die Drehachse 16, größer als der P2 auf der anderen Seite der Bohrung ist.

Zusammengefaßt weist die folgende Erfindung folgende wichtige Merkmale auf

Die Drehzapfen 5 und 6 der Dichtkugel 3 sind in zwei Lagereinheiten 9 und 10 drehbar gelagert, wobei diese parallel zur Durchflußbohrung in Richtung der Dichtung bzw, der Dichtkraft verschiebbar sind und die Drehzapfen hinter den Lagereinheiten Verzahnungen aufweisen. Im Gehäuse 1 sind zwei senkrecht zur Kugeldrehachse 16 verschiebliche Bewegungselemente 14 und 15 gelagert, die in Richtung auf die Achse 16 gesehen schräge Flächen 13 und daneben diesen gegenüber erhöhte Zahnstangen 20, 21 aufweisen. Die Zahnstangen 20, 21 greifen in offenem Zustand der Dichtkugel 3 in die Verzahnungen 7, 8 ein, die schrägen Flächen 13 liegen dabei in geringem Abstand weiteren schrägen Flächen 12 gegenüber, die an den zwei Lagereinheiten 9 und 10 angebracht sind. Der Abstand zwischen den schrägen Flachen 12 und 13 ist so bemessen, daß er bei einer Verschiebebewegung der Bewegungselemente 14 und 15 dann überbrückt ist, wenn die Verzahnungen 7 und 8 am Ende der Zahnstangen 20 und 21 angekommen sind und in die Lücke 34 zu liegen kommen.

Die zwei Bewegungselemente 14, 15 sind mittels eines Bundes 22 an im Gehäuse senkrecht zu den Drehachsen 16 in der Verschiebeachse 17 verschiebbaren Hülsen 24 und 25 befestigt. Die Hülsen 24 und 25 sind mittels von außerhalb des Gehäuses 1 drehbaren Gewindespindeln 31 in der Verschiebeachse 17 verschiebbar und das Innere der Hülsen 24, 25 ist gegenüber dem Gehäuses 1 mittels det Metallfederbälge 26 abgedichtet.

**Patentanspruch**

Kugelventil mit einer als Drehkörperfläche ausgebildeten Dichtfläche, bei welcher das Öffnen und Schließen durch Drehen einer durchbohrten Kugel (3) erfolgt und diese nach bzw. vor dem Drehen in die Schließ- und Öffnungsposition eine kleine Abhebbewegung von ihrem Sitz auf einen Metalldichtung (11) mit Rückfedereigenschaften durchführt, gekennzeichnet durch die folgenden Merkmale:

a) Drehzapfen (5, 6) der Dichtkugel (3) sind in zwei Lagereinheiten (9, 10) drehbar gelagert, wobei diese parallel zur Durchflußbohrung (2) in Richtung der Dichtung (11) bzw, der Dichtkraft verschiebbar sind und die Drehzapfen seitlich aus den Lagereinheiten (9, 10) herausragend Verzahnungen (7, 8) aufweisen,

b) in Gewhäuse (1) sind parallel zwei senkrecht zur Kugeldrehachse (16) verschiebliche Bewegungselemente (14, 15) gelagert, die, -in Richtung auf die Achse (16) gesehen-, schräge Flächen (13) und neben diesen, ihnen gegenüber erhöhte Zahnstangen (20, 21) aufweisen,

c) die Zahnstangen (20, 21) greifen in offenem Zustand der Dichtkugel (3) in die Verzahnungen (7, 8) ein, die schrägen Flächen (13) liegen dabei in geringem Abstand weiteren schrägen Flächen (12) gegenüber, die an den zwei Lagereinheiten (9, 10) angebracht sind,

d) die schrägen Flächen (12 und 13) kommen bei einer Verschiebebewegung der Bewegungselemente (14 bzw. 15) dann aneinander zur Anlage, wenn die Verzahnungen (7 bzw. 8) nach Eingriff in die Zahnstangen (20 bzw. 21) in die Lücke (34) neben den Zahnstangen (20 bzw. 21) zu liegen und damit außer Eingriff kommen.

e) die zwei Bewegungselemente (14, 15) sind mittels eines Bundes (22) an im Gehäuse senkrecht zu der Drehachse (16) in der Verschiebeachse (17) verschiebbaren Hülsen (24, 25) befestigt.

f) die Hülsen (24, 25) sind mittels von außerhalb des Gehäuses (1) drehbaren Gewindespindeln (31) in der Verschiebeachse (17) verschiebbar,

g) das Innere der Hülsen (24, 25) ist gegenüber dem Gehäuse (1) mittels der Metallfederbälge (26) abgedichtet.

## Revendication

Vanne sphérique avec une surface d'étanchéité en forme de surface de corps tournant, dans laquelle l'ouverture et la fermeture a lieu par rotation d'une sphère percée (3), et celle-ci avant rotation exécute dans la position fermée ou ouverte exécute un petit déplacement depuis son siège sur un joint métallique (11) à propriétés élastiques, caractérisée en ce que:

a) les tourillons (5, 6) de la sphère d'étanchéité (3) sont logés dans deux paliers (9, 10) en rotation, ceux-ci pouvant coulisser parallèlement au trou d'écoulement (2) dans le sens du joint (11) ou de la force d'étanchéité et les tourillons présentent latéralement en dehors des paliers (9, 10) des dentures (7, 8),

b) dans le boîtier (1) sont logés parallèlement deux éléments mobiles coulissants (14, 15) perpendiculairement à l'axe de la sphère (16), qui — vues dans le sens de l'axe 16 — présentent des surfaces obliques (13) et à côté d'elles et en face des tiges dentées (20, 21),

c) quand la sphère d'étanchéité (3) est ouverte, les tiges dentées sont en prises avec les dentures (7, 8), les surfaces obliques (13) sont alors à peur de distance des surfaces obliques (12) qui sont en face, et sont disposées sur les deux paliers (9, 10),

d) les surfaces obliques (12 et 13), par déplacement des éléments mobiles (14 ou 15) viennent en contact quand les dentures (7 ou 8) après avoir été en prise avec les tiges dentées (20 ou 21) viennent dans la lacune (34) à côte des tiges dentées (20 ou 21) et ainsi sont plus en prises,

e) les deux élémentes mobiles (14, 15) sont fixés au moyen d'un collet (22) aux douilles (24, 25) coulissant suivant un axe 17 perpendiculaire à l'axe 16,

f) les douilles 24 et 25 sont déplacées grâce à des tiges filetées (31) pouvant tourner depuis l'extérieur du boîtier (1) selon l'axe (17),

g) l'intérieur des douilles (24, 25) est rendu étanche vis-à-vis du boîtier (1) au moyen de soufflets métalliques (26).

## Claim

Ball valve, including a sealing surface which is in the form of a surface of a rotary body, wherein the opening and closing procedures are effected by the rotation of a ball (3), which has a bore extending therethrough, and, either after or prior to being rotated into the closed and open positions respectively, the ball effects a slight lifting movement to raise it from its seat and onto a metal sealing ring (11), which has resilient properties, characterised by the following features:

a) the pivots (5, 6) of the sealing ball (3) are rotatably mounted in two bearing units (9, 10), which are displaceable parallel to the throughflow bore (2) in the direction of the seal (11), or respectively of the sealing force, and the pivots are provided laterally with toothed portions (7, 8) which protrude from the bearing units (9, 10);

b) two displaceable members (14, 15), which are displaceable at right angles to the axis of rotation (16) of the ball, are mounted parallel to each other in the housing (1) and, when viewed in the direction of the axis (16), they have inclined surfaces (13) and, adjacent thereto, toothed rods (20, 21) which are situated higher than said surfaces;

c) when the sealing ball (3) is in its open position, the toothed rods (20, 21) engage in the toothed portions (7, 8), and the inclined surfaces (13) in such case are situated opposite additional inclined surfaces (12) with a small spacing therebetween, and the latter surfaces are attached to the two bearing units (9, 10);

d) during a displacement movement of the displaceable members (14 and 15 respectively), the inclined surfaces (12 and 13) come to abut against each other when the toothed portions (7 and 8 respectively) come to lie in the gap (34) adjacent to the toothed rods (20 and 21 respectively) after engagement in the toothed rods (20 and 21 respectively) and, in consequence, they become disengaged;

e) the two displaceable members (14, 15) are mounted, by means of a collar (22), on sleeves (24, 25) which are displaceable along the displacement axis (17) in the housing at right angles to the axis of rotation (16);

f) the sleeves (24, 25) are displaceable along the displacement axis (17) by means of threaded spindles (31), which are rotatable from externally of the housing (1);

g) the interior of the sleeves (24, 25) is sealed from the housing (1) by means of the resilient, metal shells (26).

Fig. 1

Fig. 2

# Fig. 3

# Fig. 4

Fig. 5